# EUROPEAN PATENT APPLICATION

(11) **EP 1 786 054 A1**
(43) Date of publication of application: **16.05.2007**
(21) Application number: 05758225.6
(22) Date of filing: 05.07.2005
(51) Int. Cl.: H01M 8/02, C08F 220/58, H01B 1/06, H01M 8/10

(54) **ELECTROLYTE MEMBRANE AND FUEL CELL UTILIZING THE ELECTROLYTE MEMBRANE**

(30) Priority: 06.07.2004 JP 2004198890
(71) Applicant: TOAGOSEI CO., LTD., Tokyo 105-8419 (JP)
(72) Inventor: KUBOTA, Kouzou, c/o TOAGOSEI CO., LTD., Nagoya-shi, Aichi 4550027 (JP); HIRAOKA, Hideki, c/o TOAGOSEI CO., LTD., Nagoya-shi, Aichi 4550027 (JP); YAMADA, Yoshinori, c/o TOAGOSEI CO., LTD., Nagoya-shi, Aichi 4550027 (JP)
(74) Representative: Pohlmann, Eckart
(86) International application number: PCT/JP2005/012361
(87) International publication number: WO 2006/004098

(57) **Abstract**

To provide an inexpensive electrolyte membrane that can be used in electrochemical device applications such as a solid polymer type fuel cell, has high proton conductivity, has excellent performance in preventing permeation of methanol when used in a DMFC, and has excellent durability when operated as a fuel cell.

An electrolyte membrane comprising a crosslinked electrolyte polymer comprising as essential constituent monomers (a) a compound having a polymerizable carbon-carbon double bond and a sulfonic acid group in one molecule, or a salt thereof, and (b) a (meth)acrylamide derivative represented by a specific structural formula.

## Description

The present invention relates to an electrolyte membrane, said electrolyte membrane being excellent for use in an electrochemical device, particularly a fuel cell, and more specifically a direct alcohol type fuel cell.

### Background Art

Accompanying increased activity in global environmental protection, prevention of the emission of so-called greenhouse gases and NOx is being strongly called for. Putting automobile fuel cell systems into practical use is considered to be very effective for reducing the total emission of such gases.

Polymer electrolyte fuel cells (PEFC, Polymer Electrolyte Fuel Cell), which are one type of electrochemical device employing a polymer electrolyte membrane, have excellent advantages such as low temperature operation, high output density, and a low environmental load. Among them, a PEFC for methanol fuel is thought to be promising as power for an electric automobile or a power source for portable equipment since methanol fuel can be supplied as a liquid fuel in the same way as gasoline.

PEFCs employing methanol as a fuel are divided into two types, that is, a reformed methanol type in which methanol is converted into a gas containing hydrogen as a main component using a reformer, and a direct methanol type (DMFC, Direct Methanol Fuel Cell) in which methanol is used directly without using a reformer. Since the DMFC does not require a reformer it has large advantages, such as it being possible to reduce the weight, and it is anticipated that it will be put into practical use.

However, if as an electrolyte membrane for the DMFC a perfluoroalkylsulfonic acid membrane, which is conventional electrolyte membrane for the PEFC employing hydrogen as a fuel, such as, for example, a Nafion (registered trademark) membrane of DuPont is used, there is the problem that the electromotive force decreases since methanol permeates the membrane. Furthermore, there is the economic problem that these electrolyte membranes are very expensive.

As means for solving the above-mentioned problems, Patent Publication 1 proposes an electrolyte membrane formed by filling a porous substrate that is inexpensive and is resistant to deformation due to an external force, such as a polyimide or a crosslinked polyethylene, with a polymer having proton conductivity. However, this electrolyte membrane has the problem that the production equipment cost increases since a step of graft-polymerizing the polymer by plasma irradiation of the substrate is included. Furthermore, when it is continuously operated as a fuel cell, the durability cannot be said to be sufficient.

Moreover, Patent Publication 2 proposes an electrolyte membrane formed by filling pores of a porous substrate that is substantially unswollen by water or by an organic solvent containing methanol with a first polymer having proton conductivity, the first polymer being a polymer derived from 2-acrylamido-2-methylpropanoic acid. However, the electrolyte membrane described in this patent publication does not yet have sufficient durability.
(Patent Publication 1) JP-A-2002-83612 (pages 1-7, and 9); JP-A denotes a Japanese unexamined patent publication application
(Patent Publication 2) WO 03/075385

It is an object of the present invention to solve these problems, that is, to provide an inexpensive electrolyte membrane that can be used in electrochemical device applications such as a polymer electrolyte fuel cell, has high proton conductivity, has excellent performance in preventing permeation of methanol when used in a DMFC, and has excellent durability when operated as a fuel cell.

As a result of an intensive investigation by the present inventors, it has been found that, with regard to an electrolyte membrane comprising a crosslinked electrolyte polymer obtained by polymerizing a sulfonic acid group-containing monomer such as 2-acrylamido-2-methylpropanesulfonic acid and/or 2-methacrylamido-2-methylpropanesulfonic acid (hereinafter, the term '(meth)acryl' is used for 'acryl and/or methacryl') or a salt thereof as a main component, when at least one monomer selected from (meth)acrylamide derivatives having a specific structure, such as *N,N'*-ethylenebis(meth)acrylamide, *N,N'*-propylenebis(meth)acrylamide, *N,N'*-butylenebis(meth)acrylamide, 1,3,5-triacryloylhexahydro-1,3,5-triazine, and bisacryloylpiperazine, is copolymerized as a method for incorporating the crosslinked structure, the electrolyte membrane has excellent proton conductivity and excellent performance in preventing the permeation of methanol, together with good durability, and the present invention has thus been accomplished.

That is, the present invention is an electrolyte membrane comprising a crosslinked electrolyte polymer comprising as essential constituent monomers
(a) a compound having a polymerizable carbon-carbon double bond and a sulfonic acid group in one molecule, or a salt thereof, and
(b) a (meth)acrylamide derivative represented by structural formula (1) below

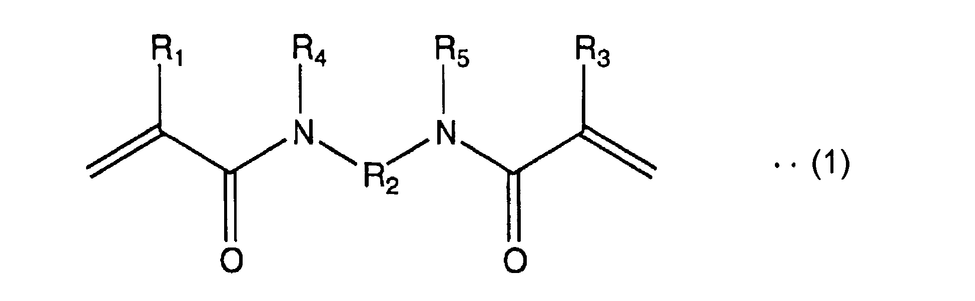

R₁ and R₃ are hydrogen or a methyl group
R₂ is an alkylene group forming a chain or a part of a ring structure, the number of carbons being two or more in the case of a chain, and the number of carbons being one or more in the case of a part of a ring structure
R₄ and R₅ are hydrogen, an alkyl group, or an alkylene group forming a part of a ring structure.

Furthermore, as the monomer (b), at least one compound selected from *N,N*'-ethylenebis(meth)acrylamide, *N,N'*-propylenebis(meth)acrylamide, *N,N'*-butylenebis(meth)acrylamide, 1,3,5-triacryloylhexahydro-1,3,5-triazine and/or 1,3,5-trimethacryloylhexahydro-1,3,5-triazine (hereinafter, the term '(meth)acryloyl' is used for 'acryloyl and/or methacryloyl'), and bis(meth)acryloylpiperazine is used.

Moreover, as the monomer (a), 2-(meth)acrylamido-2-methylpropanesulfonic acid or a salt thereof is used, and the electrolyte membrane has proportions of the monomers (a) and (b) relative to the entire monomers forming the crosslinked electrolyte polymer of 25 to 99.9 weight % and 0.1 to 75 weight % respectively.

Furthermore, the present invention is an electrolyte membrane in which pores of a porous substrate are filled with the crosslinked electrolyte polymer and, moreover, said electrolyte membrane is obtained by a production process comprising a step (1) of filling pores of a porous substrate with a monomer forming a crosslinked electrolyte polymer, or a solution or a dispersion thereof, and a step (2) of polymerizing and crosslinking the monomer with which the pores have been filled.

Furthermore, the present invention relates to a fuel cell formed by incorporating the electrolyte membrane.

### Brief Description of Drawing

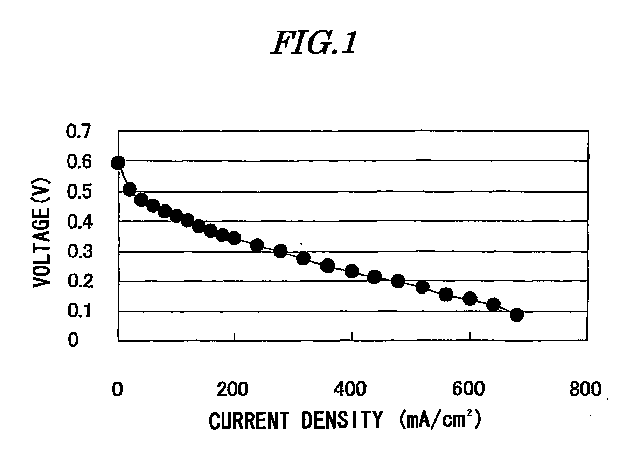

(FIG. 1) A graph showing a current density - voltage curve in a fuel cell of Example 8.

The present invention is explained in detail below.

The electrolyte membrane of the present invention comprises a crosslinked electrolyte polymer formed by copolymerizing a monomer mixture (hereinafter, called a 'polymer precursor') containing as essential constituent monomers (a) a compound having a polymerizable carbon-carbon double bond and a sulfonic acid group in one molecule, or a salt thereof, and (b) a (meth)acrylamide derivative represented by Formula (1) above.

The proportions of the essential constituent monomers (a) and (b) relative to the entire monomers forming the crosslinked electrolyte polymer are preferably 25 to 99.9 weight % and 0.1 to 75 weight % respectively. When the monomer (a) is less than the lower limit of the above-mentioned range, the electrolyte membrane obtained tends to have low proton conductivity, the output per area of the electrolyte membrane obtained tends to decrease, and a fuel cell into which it is incorporated has large dimensions. On the other hand, when it exceeds the upper limit of the above-mentioned range, the prevention of methanol permeability and the durability tend to be degraded, none of which is desirable.

When the monomer (b) is less than the lower limit of the above-mentioned range, the electrolyte membrane obtained tends to have low prevention of methanol permeability and durability, whereas when it is higher than the upper limit value of the above-mentioned range, the proton conductivity tends to be low, none of which is desirable.

More preferred ranges are 40 to 90 weight % for the monomer (a) and 10 to 60 weight % for the monomer (b).

The monomer (a) forming the crosslinked electrolyte polymer used in the electrolyte membrane of the present invention is a compound having a polymerizable carbon-carbon double bond and a sulfonic acid group in one molecule, or a salt thereof, and is not particularly limited; specific examples thereof include monomers or salts thereof, such as 2-(meth)acryloylethanesulfonic acid, 2-(meth)acryloylpropanesulfonic acid, 2-(meth)acrylamido-2-methylpropanesulfonic acid, styrenesulfonic acid, allylsulfonic acid and/or methallylsulfonic acid (hereinafter, the term '(meth)allyl' is used for 'allyl and/or methallyl'), and vinylsulfone. They may be used singly or they may be copolymerized, and from the viewpoint of good polymerizability 2-(meth)acrylamido-2-methylpropanesulfonic acid or a salt thereof is particularly preferable. Furthermore, since vinylsulfonic acid has the highest sulfonic acid content in relation to molecular weight, if it is used as a copolymer component the proton conductivity of the electrolyte membrane improves, which is preferable.

The monomer (b) forming the crosslinked electrolyte polymer used in the electrolyte membrane of the present invention is a (meth)acrylamide derivative represented by Formula (1) above, and specific preferred examples thereof include compounds selected from *N,N'*-ethylenebis(meth)acrylamide, *N,N'*-propylenebis(meth)acrylamide, *N,N'*-butylenebis(meth)acrylamide, 1,3,5-tri(meth)acryloylhexahydro-1,3,5-triazine, and bis(meth)acryloylpiperazine; they may be used singly or they may be copolymerized, and from the viewpoint of high solubility in water or the durability being further improved *N,N*'-ethylenebis(meth)acrylamide is particularly preferable.

The monomer forming the crosslinked electrolyte polymer used in the electrolyte membrane of the present invention comprises as essential components the monomers (a) and (b), and may use another monomer in combination as necessary.

Said monomer is not particularly limited as long as it is copolymerizable with the monomers (a) and (b), and specific examples include, as water-soluble monomers, acidic monomers or salts thereof such as (meth)acrylic acid, maleic acid (anhydride), fumaric acid, crotonic acid, itaconic acid, vinylphosphonic acid, and an acidic phosphoric acid group-containing (meth)acrylate; monomers such as (meth)acrylamide, an *N*-substituted (meth)acrylamide, 2-hydroxyethyl acrylate and/or 2-hydroxyethyl methacrylate (hereinafter, the term '(meth)acrylate' is used for 'acrylate and/or methacrylate'), 2-hydroxypropyl (meth)acrylate, methoxypolyethylene glycol (meth)acrylate, polyethylene glycol (meth)acrylate, *N*-vinylpyrrolidone, and *N*-vinylacetamide; and basic monomers or quaternary derivatives thereof such as *N,N*-dimethylaminoethyl (meth)acrylate, *N,N*-dimethylaminopropyl (meth)acrylate, and *N,N*-dimethylaminopropyl (meth)acrylamide.

Furthermore, for the purpose of adjusting the water absorption of the polymer with which pores are filled, an acrylic acid ester such as methyl (meth)acrylate, ethyl (meth)acrylate, or butyl (meth)acrylate, or a hydrophobic monomer such as vinyl acetate or vinyl propionate may be used.

With regard to the crosslinked electrolyte polymer used in the electrolyte membrane of the present invention, a method for incorporating a crosslinked structure preferably employs a crosslinked structure derived from the essential constituent monomer (b).

With regard to a method for incorporating the crosslinked structure derived from the monomer (b), there is a method in which, after pores of a porous substrate are filled with a polymer precursor, a crosslinking reaction with the monomer (b) is carried out at the same time as a polymerization reaction or after a polymer is formed by a polymerization reaction, or a method in which a polymer precursor is polymerized in advance, pores of a porous substrate are filled with the polymer solution, and a crosslinking reaction is then carried out. Among these methods, in the method in which a polymer is formed in advance and then filling is carried out gelation is easily caused during polymerization, which makes it impossible to carry out filling and gives a poor yield, and since the viscosity of the polymer is higher than that of the polymer precursor solution it takes a long time to fill the pores or the filling is incomplete; it is therefore preferable to employ the method in which filling with a polymer precursor is carried out in advance, followed by polymerization and crosslinking.

Said crosslinking is preferably promoted by heating or activation energy radiation such as ultraviolet rays, an electron beam, or gamma rays, and the conditions therefor are desirably 50°C to 150°C for 1 to 120 minutes in the case of heating and 10 to 5000 mJ/cm² for irradiation with ultraviolet rays.

Furthermore, for the crosslinked electrolyte polymer used in the electrolyte membrane of the present invention, a crosslinked structure other than the crosslinked structure derived from the essential constituent monomer (b), which is a polyfunctional monomer, may be incorporated; a method therefor is not particularly limited, and a known method may be used.

Specific examples thereof include a method in which a polymerization reaction is carried out using in combination a crosslinking agent having two or more polymerizable double bonds, a method in which a monomer having a functional group that can form a crosslinked structure is copolymerized, a method in which a crosslinking agent having two or more groups in the molecule that react with a functional group of the polymer is used, a method in which selfcrosslinking due to a hydrogen abstraction reaction during polymerization is utilized, and a method in which after polymerization the polymer is irradiated with activation energy radiation such as ultraviolet rays, an electron beam, or gamma rays.

Among these methods, from the viewpoint of ease of incorporation of the crosslinked structure, the method in which a polymerization reaction is carried out using in combination a crosslinking agent having two or more polymerizable double bonds is preferable. Examples of said crosslinking agent include *N,N*-methylenebisacrylamide, ethylene glycol di(meth)acrylate, polyethylene glycol di(meth)acrylate, propylene glycol di(meth)acrylate, polypropylene glycol di(meth)acrylate, trimethylolpropane di(meth)acrylate, trimethylolpropane tri(meth)acrylate, pentaerythritol di(meth)acrylate, pentaerythritol tri(meth)acrylate, pentaerythritol tetra(meth)acrylate, trimethylolpropane diallyl ether, pentaerythritol triallyl ether, divinylbenzene, bisphenol diacrylate, isocyanuric acid di(meth)acrylate, tetraallyloxyethane, triallylamine, triallylcyanurate, triallyl isocyanurate, and a diallyloxyacetate. From the viewpoint of a high crosslinking density being easily obtained, a method in which a water-soluble monomer having a functional group that can form a crosslinked structure is copolymerized is also preferable. Examples of such a compound include *N*-methylolacrylamide, *N*-methoxymethylacrylamide, and *N*-butoxymethylacrylamide; crosslinking may be carried out by a condensation reaction, etc. caused by heating after a polymerizable double bond is radically polymerized, or a similar crosslinking reaction may be caused by heating at the same time as radical polymerization. These crosslinking agents may be used singly or in a combination of two or more types as necessary.

The amount of copolymerizable crosslinking agent used is 0.01 to 20 weight % relative to the total weight of unsaturated monomers in the polymer precursor, preferably 0.1 to 20 weight %, and more preferably 0.1 to 10 weight %. If the amount of crosslinking agent is too small uncrosslinked polymer is easily leached, thus causing the problem that, when operated as a fuel cell, the output decreases within a short period of time, etc., and if the amount thereof is too large, since the crosslinking agent component is poorly compatible, there is the problem that proton conduction is prevented and the cell performance is degraded, none of which is desirable.

As a method for obtaining a crosslinked electrolyte polymer by copolymerizing a polymer precursor used in the electrolyte membrane of the present invention, a technique of a known aqueous solution radical polymerization method may be used. Specific examples thereof include redox initiated polymerization, thermally initiated polymerization, electron beam initiated polymerization, and photoinitiated polymerization using, for example, ultraviolet rays.

As a radical polymerization initiator for thermally initiated polymerization or redox initiated polymerization, the following compounds may be cited as examples. A peroxide such as ammonium persulfate, potassium persulfate, sodium persulfate, hydrogen peroxide, benzoyl peroxide, cumene hydroperoxide, or di-*t*-butyl peroxide; a redox initiator that is a combination of the above-mentioned peroxide and a reducing agent such as a sulfite, a bisulfite, thiosulfate, formamidinesulfinic acid, or ascorbic acid; or an azo-based radical polymerization initiator such as 2,2'-azobis(2-amidinopropane) dihydrochloride or azobiscyanovaleric acid. These radical polymerization initiators may be used singly or in a combination of two or more types.

Since, among them, the peroxide-based radical polymerization initiator can generate a radical by abstracting hydrogen from a carbon-hydrogen bond, when it is used in combination with an organic material such as a polyolefin as the porous substrate, a chemical bond can be formed between the surface of the substrate and the polymer which is filled, which is preferable.

Among the above-mentioned means for initiating radical polymerization, the polymerization that is photoinitiated by means of ultraviolet rays is desirable from the viewpoint of a polymerization reaction being easily controlled and a desired electrolyte membrane being obtained by a relatively simple process with good productivity. Furthermore, when photoinitiated polymerization is carried out, it is preferable to dissolve or disperse a radical photopolymerization initiator in advance in a polymer precursor or a solution or dispersion thereof.

Examples of the radical photopolymerization initiator include benzoin, benzil, acetophenone, benzophenone, quinone, thioxanthone, thioacridone, and derivatives thereof, which are generally used in ultraviolet polymerization, and specific examples thereof include benzoin types such as benzoin methyl ether, benzoin ethyl ether, benzoin isopropyl ether, and benzoin isobutyl ether; acetophenone types such as diethoxyacetophenone, 2,2-dimethoxy-1,2-diphenylethan-1-one, 1-hydroxycyclohexyl phenyl ketone, 2-methyl-1-(4-(methylthio)phenyl)-2-morpholinopropan-1-one, 2-benzyl-2-dimethylamino-1-(4-morpholinophenyl)butan-1-one, 2-hydroxy-2-methyl-1-phenylpropan-1-one, and 1-(4-(2-hydroxyethoxy)phenyl)-2-hydroxy-2-methyl-1-propan-1-one; and benzophenone types such as methyl o-benzoylbenzoate, 4-phenylbenzophenone, 4-benzoyl-4'-methyldiphenylsulfide, 3,3',4,4'-tetra(*t*-butylperoxycarbonyl)benzophenone, 2,4,6-trimethylbenzophenone, 4-benzoyl-*N,N*-dimethyl-*N*-[2-(1-oxy-2-propenyloxy)ethyl]benzenemethanamini um bromide, (4-benzoylbenzyl)trimethylammonium chloride, 4,4'-dimethylaminobenzophenone, and 4,4'-diethylaminobenzophenone.

The amount of photopolymerization initiator used is preferably 0.001 to 1 weight % relative to the total weight of the unsaturated monomer in the polymer precursor, more preferably 0.001 to 0.5 weight %, and particularly preferably 0.01 to 0.5 weight %. If the amount of initiator is too small, there is the problem that there is a large amount of unreacted monomer, etc., and if it is too large, there are the problems that the crosslinking density of the polymer formed is too low and the durability when the fuel cell is operated is low, none of which is desirable.

Among them, an aromatic ketone radical polymerization initiator such as benzophenone, thioxanthone, quinone, or thioacridone is preferable since it can generate a radical by abstracting hydrogen from a carbon-hydrogen bond and, when used in combination with an organic material such as a polyolefin as the porous substrate, it can form a chemical bond between the surface of the substrate and the polymer used for filling.

The electrolyte membrane of the present invention preferably has a structure in which the interior of the pores of the porous substrate is filled with crosslinked electrolyte polymer.

The porous substrate used in the present invention is preferably a material that is substantially unswollen by methanol or water, and it is particularly desirable that there is little or almost no change in area when wet with water compared with when it is dry.

The percentage increase in area depends on the immersion time and temperature, and in the present invention it is preferable for the percentage increase in area when immersed in pure water at 25°C for 1 hour to be at most 20% compared with the area when it is dry.

Furthermore, the porous substrate used in the present invention preferably has a tensile modulus of elasticity of 500 to 5000 MPa, and more preferably 1000 to 5000 MPa, and preferably has a breaking strength of 50 to 500 MPa, and more preferably 100 to 500 MPa.

When the values are smaller than these ranges, the membrane is easily deformed by the force of the polymer with which it is filled being swollen by methanol or water, and when the values are larger than these ranges, the substrate becomes too brittle and the membrane easily cracks as a result of press molding when assembling an electrode or tightening when incorporating into a cell, etc.

Furthermore, the porous substrate preferably has heat resistance with respect to the temperature at which the fuel cell is operated and also has resistance to stretching when an external force is applied thereto.

Examples of materials having such properties include, for an inorganic material, glass and ceramics such as alumina or silica. Examples of an organic material include an engineering plastic such as an aromatic polyimide and a polyolefin that has been made resistant to deformation such as stretching due to an external force by a method involving irradiation with radiation, crosslinking by addition of a crosslinking agent, or drawing. These materials may be used singly or in a combination of two or more types as a composite by lamination, etc.

Among these porous substrates, it is preferable to employ one formed from a drawn polyolefin, a crosslinked polyolefin, a drawn and then crosslinked polyolefin, or a polyimide since the operability of the filling step is good and the substrate is readily available.

The porosity of the porous substrate used in the present invention is preferably 5% to 95%, more preferably 5% to 90%, and particularly preferably 20% to 80%. The average pore size is preferably in the range of 0.001 to 100 µm, and more preferably in the range of 0.01 to 1 µm. When the porosity is too small, the number of protonic acid groups, which are proton conducting groups, per unit area is too small and the output as a fuel cell is low, and when the porosity is too large, the membrane strength deteriorates, none of which is desirable.

Moreover, the substrate preferably has a thickness of 200 µm or less, more preferably 1 to 150 µm, yet more preferably 5 to 100 µm, and particularly preferably 5 to 50 µm. When the membrane thickness is too thin, the membrane strength deteriorates and the permeation of methanol increases, and when it is too thick, the membrane resistance becomes too large and the output of a fuel cell becomes low, none of which is desirable.

A method of filling the pores of the porous substrate with the crosslinked electrolyte polymer is not particularly limited, and a known method may be used. For example, there is a method in which a porous substrate is impregnated with a polymer precursor or a solution or dispersion thereof, followed by polymerization and crosslinking of the polymer precursor. In this process, the mixture used for filling may contain as necessary a crosslinking agent, a polymerization initiator, a catalyst, a curing agent, a surfactant, etc.

When the polymer precursor with which the pores of the porous substrate are filled has a low viscosity, it may be used as it is for impregnation, but otherwise it is preferable to make a solution or a dispersion. It is particularly preferable to make a solution having a concentration of 10 to 90 weight %, and more preferably a 20 to 70 weight % solution.

Furthermore, when a component that is insoluble in water is used, some or all of the water may be replaced with an organic solvent, but when an organic solvent is used, it is necessary to remove all the organic solvent before assembling an electrode, therefore it is preferable to use an aqueous solution. The reason why impregnation is carried out using a solution is that impregnation into a porous substrate having pores is facilitated by the use of a solution in water or a solvent, and that forming a pre-swollen gel within a pore can exhibit an effect in preventing polymer within the pore from coming out due to the polymer being swollen too much by water or methanol when an electrolyte membrane thus formed is made into a fuel cell.

For the purpose of facilitating the impregnation procedure, the porous substrate may be hydrophilized, a surfactant may be added to a solution of the polymer precursor, or application of ultrasonic waves during impregnation may be carried out.

Furthermore, it is preferable for the crosslinked electrolyte polymer having proton conductivity to be chemically bonded to the surface of the porous substrate, and in particular the surface of pores; as means for forming the bonding, when the polymer precursor with which the pores are filled is a radically polymerizable material, there is a method in which the substrate is irradiated in advance with plasma, ultraviolet rays, an electron beam, gamma rays, corona discharge, etc. so as to form radicals on the surface, and when the polymer precursor with which the pores are filled is polymerized, graft polymerization onto the surface of the substrate occurs at the same time, a method in which, after the substrate is filled with the polymer precursor, an electron beam is applied thereto so as to cause graft polymerization onto the surface of the substrate and polymerization of the polymer precursor at the same time, a method in which the porous substance is filled with the polymer precursor mixed with a hydrogen abstraction type radical polymerization initiator and heated or irradiated with ultraviolet rays to thus cause graft polymerization onto the surface of the substrate and polymerization of the polymer precursor at the same time, a method employing a coupling agent, etc. These methods may be carried out singly or in a combination of two or more methods thereof.

The electrolyte membrane of the present invention can have excellent proton conductivity due to the crosslinked electrolyte polymer having a sulfonic acid group contained therein. Furthermore, since the crosslinked electrolyte polymer employs as a crosslinking agent a polyfunctional monomer selected from *N,N*'-ethylenebis(meth)acrylamide, *N,N*'-propylenebis(meth)acrylamide, *N,N*'-butylenebis(meth)acrylamide, 1,3,5-tri(meth)acryloylhexahydro-1,3,5-triazine, and bis(meth)acryloylpiperazine, the methanol crossover can be suppressed, and the electrolyte polymer obtained is stable toward hydrolysis. As a result, the present electrolyte membrane has excellent durability.

### Examples

The present invention is explained in further detail below by reference to Examples and Comparative Examples, but the scope of the present invention is not limited by these examples. Furthermore, parts in Examples and Comparative Examples means parts by weight unless otherwise specified. The proton conductivity, the methanol permeability, and the durability (forced deterioration test) of the electrolyte membrane obtained were evaluated as follows.

### <Proton conductivity>

The conductivity of a swollen sample at 25°C was measured. An electrolyte membrane that had swollen after being immersed in pure water for 1 hour was sandwiched between two platinum plates to give a measurement sample. Measurement of AC impedance from 100 Hz to 40 MHz was then carried out to measure the conductivity. The higher the conductivity, the easier it is for protons to move in the electrolyte membrane, thus exhibiting its excellence in application to a fuel cell.

### <Permeability to methanol>

A permeation experiment at 25°C was carried out as follows. An electrolyte membrane was sandwiched between glass cells, one of the cells was charged with a 10 weight % aqueous solution of methanol, and the other cell was charged with pure water. The amount of methanol that had permeated to the pure water side was measured over time by gas chromatography, and a permeability coefficient when a steady state was attained was measured. The lower the permeability coefficient, the harder it is for methanol to permeate through the electrolyte membrane, thus exhibiting its suitability in application to a fuel cell.

### <Durability (forced deterioration test)>

Durability was evaluated by forced deterioration instead of observing the deterioration of a polymer due to hydrolysis within a cell. An electrolyte membrane immersed in pure water was kept at 121°C under a pressure of 2 atmospheres for 6 hours. From a change in weight between before and after the test, a leaching rate of the polymer with which the electrolyte membrane was filled was obtained. The larger the leaching rate, the quicker the deterioration when operated in a cell, and the smaller the rate, the more resistant to deterioration.

### (Example 1)

As a porous substrate, a crosslinked polyethylene membrane (thickness 16 µm, porosity 38%) was used. The porous substrate was immersed in an aqueous monomer solution containing 45 parts of 2-acrylamido-2-methylpropanesulfonic acid, 5 parts of *N,N*'-ethylenebisacrylamide, 0.5 parts of a nonionic surfactant, 0.05 parts of 2-hydroxy-2-methyl-1-phenylpropan-1-one, and 50 parts of water, thus filling the porous substrate with the aqueous solution. Subsequently, after the porous substrate was pulled out of the solution, it was irradiated with ultraviolet rays using a high-pressure mercury lamp for 2 minutes to thus polymerize the monomer within the pores and give an electrolyte membrane. The results of evaluation of the membrane thus obtained are given in Table 1.

### (Synthetic Example 1)

A four-necked flask was charged with a mixture of 150 g of acetonitrile and 5 g of acryloyl chloride, and stirred while maintaining it at 5°C or less in an ice bath. A mixture of 100 g of acetonitrile and 3.7 g of propylenediamine was added dropwise little by little to the mixture within the flask while maintaining it at 5°C or less. After completion of the dropwise addition, the ice bath was removed and stirring was carried out at room temperature for 5 hours. A precipitate formed in the reaction solution was removed by filtration, and when the filtrate was concentrated, crystals were deposited, and they were filtered and dried to give N,N'-propylenebisacrylamide.

### (Example 2)

An electrolyte membrane was obtained in the same manner as in Example 1 except that the N,N'-propylenebisacrylamide obtained in Synthetic Example 1 was used instead of *N,N*'-ethylenebisacrylamide. The results of evaluation of the membrane thus obtained are given in Table 1.

### (Synthetic Example 2)

A four-necked flask was charged with a mixture of 150 g of acetonitrile and 5 g of acryloyl chloride, and stirred while maintaining it at 5°C or less in an ice bath. A mixture of 100 g of acetonitrile and 4.4 g of butylenediamine was added dropwise little by little to the mixture within the flask while maintaining it at 5°C or less. After completion of the dropwise addition, the ice bath was removed and stirring was carried out at room temperature for 5 hours. A precipitate formed in the reaction solution was removed by filtration, and when the filtrate was concentrated, crystals were deposited, and they were filtered and dried to give *N,N'*-butylenebisacrylamide.

### (Example 3)

An electrolyte membrane was obtained in the same manner as in Example 1 except that the *N,N*'-butylenebisacrylamide obtained in Synthetic Example 2 was used instead of *N,N*'-ethylenebisacrylamide. The results of evaluation of the membrane thus obtained are given in Table 1.

### (Example 4)

An electrolyte membrane was obtained in the same manner as in Example 1 except that bisacryloylpiperazine was used instead of *N,N*'-ethylenebisacrylamide, the water was changed from 50 parts to 35 parts, and there was the new addition of 15 parts of dimethylsulfoxide. The results of evaluation of the membrane thus obtained are given in Table 1.

### (Example 5)

An electrolyte membrane was obtained in the same manner as in Example 1 except that 1,3,5-triacryloylhexahydro-1,3,5-triazine was used instead of *N,N'*-ethylenebisacrylamide, the acrylamido-2-methylpropanesulfonic acid was changed from 45 parts to 35 parts, and there was the new addition of 10 parts of acrylic acid. The results of evaluation of the membrane thus obtained are given in Table 1.

### (Example 6)

An electrolyte membrane was obtained in the same manner as in Example 1 except that the 2-acrylamido-2-methylpropanesulfonic acid was changed from 45 parts to 40 parts and the *N,N'*-ethylenebisacrylamide was changed from 5 parts to 10 parts. The results of evaluation of the membrane thus obtained are given in Table 1.

### (Example 7)

An electrolyte membrane was obtained in the same manner as in Example 5 except that in Example 5 the 2-acrylamido-2-methylpropanesulfonic acid was changed from 35 parts to 25 parts, the 1,3,5-triacryloylhexahydro-1,3,5-triazine was changed from 5 parts to 10 parts, and the acrylic acid was changed from 10 parts to 15 parts. The results of evaluation of the membrane thus obtained are given in Table 1.

### (Comparative Example 1)

An electrolyte membrane was obtained in the same manner as in Example 1 except that *N,N'*-methylenebisacrylamide was used instead of *N,N*'-ethylenebisacrylamide. The results of evaluation of the membrane thus obtained are given in Table 1.

### (Comparative Example 2)

An experiment was carried out in the same manner as in Example 6 except that in Example 6 *N,N'*-methylenebisacrylamide was used instead of *N,N*'-ethylenebisacrylamide; a large amount of *N,N'*-methylenebisacrylamide remained undissolved in the monomer solution, it became difficult to fill the porous substrate with the monomer solution, and an electrolyte membrane could not be obtained.

### (Comparative Example 3)

An electrolyte membrane was obtained in the same manner as in Example 5 except that in Example 5 *N,N'*-methylenebisacrylamide was used instead of 1,3,5-triacryloylhexahydro-1,3,5-triazine. The results of evaluation of the membrane thus obtained are given in Table 1.

### (Comparative Example 4)

An electrolyte membrane was obtained in the same manner as in Example 7 except that in Example 7 *N,N'*-methylenebisacrylamide was used instead of 1,3,5-triacryloylhexahydro-1,3,5-triazine. The results of evaluation of the membrane thus obtained are given in Table 1.

### (Comparative Example 5)

In Example 6, 2 parts of *N,N'*-methylenebisacrylamide and 8 parts of *N*-methylolacrylamide were used instead of *N,N'*-ethylenebisacrylamide, and after polymerization with ultraviolet rays was carried out in the same manner as in Example 6 heating was carried out at 120°C for 30 minutes to thus carry out a crosslinking reaction of the methylol moiety of the *N*-methylolacrylamide residue to give an electrolyte membrane. The results of evaluation of the membrane thus obtained are given in Table 1.

### (Example 8)

In order to confirm that the membrane obtained would function as a fuel cell, the membrane prepared in Example 1 was incorporated into a DMFC cell and evaluated.

As a cathode a platinum-supported carbon (TEC10E50E, manufactured by Tanaka Kikinzoku Kogyo K.K.) was used, and as a fuel electrode a platinum ruthenium alloy-supported carbon (TEC61 E54, manufactured by Tanaka Kikinzoku Kogyo K.K.) was used. These catalyst powders were mixed with a polymer electrolyte solution (Nafion 5% solution, manufactured by DuPont) and a polytetrafluoroethylene dispersion and stirred while adding water as appropriate to give a reaction layer paste. This was printed on one side of a carbon paper (TGP-H-060, manufactured by Toray Industries, Inc.) by a screen printing method and dried to give an electrode. In this process, the amount of platinum on the cathode side was 1 mg/cm², and the total amount of platinum and ruthenium on the fuel electrode side was 3 mg/cm². They were superimposed on a central area of the electrolyte membrane obtained in Example 1 with the coated side as the inside, and hot-pressed at 120°C to give a fuel cell membrane electrode assembly (MEA). This was incorporated into a DMFC cell, the cell was run, and the performance was evaluated. With regard to the running conditions for the DMFC, the cell temperature was 50°C, a 3 mol/L aqueous solution of methanol was fed to the fuel electrode at a rate of 10 mL/min, and pure air was fed to the cathode at a rate of 0.3 Umin. The voltage was read out while increasing the current value, thus giving the current density - voltage curve of FIG. 1.

**(Table 1)**

| | Proton conductivity (mS/cm) | Methanol permeability coefficient ((µm·kg)/(m²·h)) | Durability (leaching rate) (%) |
|---|---|---|---|
| Ex. 1 | 44 | 10.5 | 16 |
| Ex. 2 | 44 | 11.2 | 14 |
| Ex. 3 | 45 | 11.8 | 11 |
| Ex. 4 | 43 | 10.3 | 22 |
| Ex. 5 | 36 | 9.8 | 19 |
| Ex. 6 | 36 | 6.5 | 11 |
| Ex. 7 | 30 | 4.2 | 15 |
| Comp. Ex. 1 | 42 | 10.3 | 88 |
| Comp. Ex. 3 | 35 | 6.2 | 91 |
| Comp. Ex. 4 | 31 | 4.5 | 80 |
| Comp. Ex. 5 | 26 | 13.1 | 63 |

As is clear from Table 1, the Examples exhibited excellent performance in the durability test compared with the Comparative Examples.

The electrolyte membrane of the present invention can be used not only in a fuel cell but also in applications such as electrochemical device elements, for example various types of sensor, and a separating membrane for electrolysis.

The electrolyte membrane of the present invention comprises a crosslinked electrolyte polymer having a specific composition, and thereby has improved durability. Furthermore, since it is an electrolyte membrane that has excellent proton conductivity and excellent performance in preventing the permeation of methanol, it is suitably used as an electrolyte membrane for a polymer electrolyte fuel cell and, in particular, a direct methanol fuel cell.

## Claims

1. An electrolyte membrane comprising a crosslinked electrolyte polymer comprising as essential constituent monomers
(a) a compound having a polymerizable carbon-carbon double bond and a sulfonic acid group in one molecule, or a salt thereof, and
(b) an acrylamide derivative and/or a methacrylamide derivative represented by structural formula (1) below 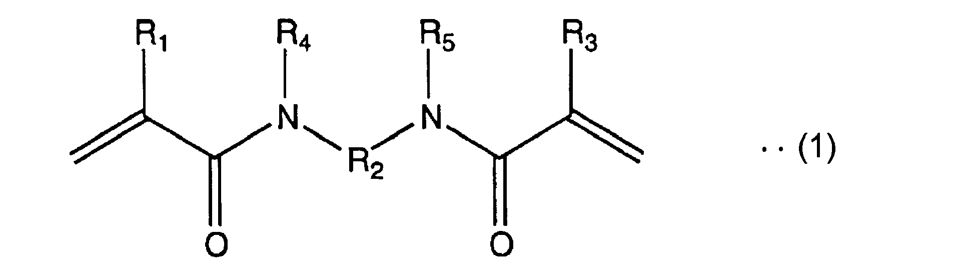
R₁ and R₃ are hydrogen or a methyl group
R₂ is an alkylene group forming a chain or a part of a ring structure, the number of carbons being two or more in the case of a chain, and the number of carbons being one or more in the case of a part of a ring structure
R₄ and R₅ are hydrogen, an alkyl group, or an alkylene group forming a part of a ring structure.

2. The electrolyte membrane according to Claim 1, wherein the monomer (b) is at least one compound selected from *N,N*'-ethylenebisacrylamide, *N,N*'-ethylenebismethacrylamide, *N,N*'-propylenebisacrylamide, *N,N*'-propylenebismethacrylamide, *N,N*'-butylenebisacrylamide, *N,N*'-butylenebismethacrylamide, 1,3,5-triacryloylhexahydro-1,3,5-triazine, 1,3,5-trimethacryloylhexahydro-1,3,5-triazine, bisacryloylpiperazine, and bismethacryloylpiperazine.

3. The electrolyte membrane according to Claim 1, wherein the monomer (b) is *N,N*'-ethylenebisacrylamide and/or *N,N*'-ethylenebismethacrylamide.

4. The electrolyte membrane according to any one of Claims 1 to 3, wherein the monomer (a) is 2-acrylamido-2-methylpropanesulfonic acid and/or 2-methacrylamido-2-methylpropanesulfonic acid, or a salt thereof.

5. The electrolyte membrane according to any one of Claims 1 to 4, wherein the electrolyte membrane has proportions of the monomers (a) and (b) relative to the entire monomers forming the crosslinked electrolyte polymer of 25 to 99.9 weight % and 0.1 to 75 weight % respectively.

6. The electrolyte membrane according to any one of Claims 1 to 4, wherein the electrolyte membrane has proportions of the monomers (a) and (b) relative to the entire monomers forming the crosslinked electrolyte polymer of 40 to 90 weight % and 10 to 60 weight % respectively.

7. The electrolyte membrane according to any one of Claims 1 to 6, wherein pores of a porous substrate are filled with the crosslinked electrolyte polymer.

8. The electrolyte membrane according to any one of Claims 1 to 7, wherein the electrolyte membrane is obtained by a production process comprising
a step (1) of filling pores of a porous substrate with a monomer forming a crosslinked electrolyte polymer, or a solution or a dispersion thereof, and
a step (2) of polymerizing and crosslinking the monomer with which the pores have been filled.

9. The electrolyte membrane according to Claim 8, wherein the step of polymerizing and crosslinking the monomer with which the pores have been filled employs irradiation with ultraviolet rays.

10. A fuel cell formed by incorporating the electrolyte membrane according to any one of Claims 1 to 9.
